# FASCICULE DE BREVET EUROPEEN

(11) **EP 1 249 432 B1**
(45) Date de publication et mention de la délivrance du brevet: **04.02.2004**
(21) Numéro de dépôt: 02290830.5
(22) Date de dépôt: 04.04.2002
(51) Int. Cl.: C03B 37/012, C03B 37/018

(54) **Procédé de fabrication de préformes de fibres optiques à grande capacité par MCVD**
Verfahren zum Herstellen von Vorformen für optische Fasern mit hoher Kapazität mittels MCVD
Process of manufacturing high capacity optical fibre preforms by MCVD

(30) Priorité: 09.04.2001 FR 0104789
(43) Date de publication de la demande: 16.10.2002
(73) Titulaire: ALCATEL, 75008 Paris (FR)
(72) Inventeur: Orcel, Gérard, 78600 Maison Laffitte (FR); Nicolardot, Marc, 95480 Pierrelaye (FR); Campion, Jean-Florent, 78700 Conflans St. Honorine (FR)
(74) Mandataire: Laroche, Danièle

(56) Documents cités:
- EP-A- 0 762 159
- EP-A- 0 972 752
- WO-A-00/27767
- PATENT ABSTRACTS OF JAPAN vol. 13, no. 262, 16 juin 1989 (1989-06-16) & JP 01 065038 A (SUMITOMO ELECTRIC IND LTD), 10 mars 1989 (1989-03-10)
- PATENT ABSTRACTS OF JAPAN vol. 12, no. 391, 18 octobre 1988 (1988-10-18) & JP 63 139028 A (SUMITOMO ELECTRIC IND LTD), 10 juin 1988 (1988-06-10)

## Description

L'invention se rapporte à un procédé de fabrication de préformes de fibres optiques à grande capacité au moyen de procédés MCVD.

La fibre optique est obtenue à partir de la préforme par étirage à chaud (fibrage) homothétique, c'est-à-dire sous conservation des différentes parties de la préforme.

Les préformes peuvent être obtenues par des procédés CVD tels que le MCVD (acronyme anglais pour « modified chemical vapor deposition », dépôt chimique en phase vapeur modifié) ou par le procédé VAD (acronyme anglais pour « vapor axial deposition »).

Dans le cas de dépôt par MCVD, on dépose à l'intérieur d'un tube en silice, appelé tube de dépôt, des couches successives de composés oxydés puis vitrifiés à l'aide d'un chalumeau. Ces couches correspondent au coeur et à la partie interne de la gaine optique de la préforme. Elles présentent un indice variable en accord avec les propriétés souhaitées de la fibre optique.

L'obtention de préformes à grande capacité est souhaitable pour des raisons d'économie de procédé. Il est également souhaitable de disposer de fibres optiques de grande longueur afin d'éviter les pertes de connexion.

La capacité d'une préforme est liée au ratio entre le rayon extérieur de la gaine interne et le rayon du coeur, aussi désigné par ratio b : a. Pour un diamètre de coeur donné pour la fibre étirée, la capacité d'une préforme sera donc d'autant plus aisée à réaliser que le ratio b : a est faible.

La capacité d'une préforme dépend donc de la quantité de matériau de coeur qui peut être déposée à l'intérieur du tube de dépôt. Or lorsque le coeur se trouve proche du tube de dépôt, l'exigence de pureté est plus rigoureuse envers le matériau du tube de dépôt. Celui-ci doit être d'une pureté très élevée afin d'éviter la migration d'impuretés vers les parties de la fibre participant à la propagation de la lumière. Au cas contraire, on observe une dégradation des propriétés de propagation. Ainsi, il est en général nécessaire de déposer une couche appelée gaine interne à l'intérieur du tube de dépôt avant de procéder au dépôt du coeur. Cependant, cette couche peut être de faible épaisseur si l'on utilise un tube de dépôt de haute pureté.

Après dépôt des couches correspondant au coeur et à la gaine interne, le tube est refermé sur lui-même, opération que l'on appelle le rétreint. On obtient une préforme appelée préforme primaire.

L'indice de réfraction des couches correspondant au coeur et à la gaine interne est contrôlé par le biais de la concentration de dopants chimiques.

Ainsi, on utilise souvent le germanium afin d'augmenter l'indice de réfraction. Le dopage par des dérivés fluorés ou des composés du bore permet quant à lui d'abaisser l'indice de réfraction.

L'indice peut également être affecté par d'autres composés présents. Ainsi, le phosphore ajouté dans le but d'améliorer les qualités optiques de la fibre augmente également légèrement l'indice.

La vitesse de dépôt par MCVD est limitée par le transfert de chaleur à travers le tube de dépôt. Afin d'optimiser les conditions de dépôt par MCVD, les tubes de dépôt ont donc une épaisseur relativement faible. Après rétreint du tube en préforme primaire, on renforce l'épaisseur du tube par dépôt d'une gaine externe.

On connaît notamment deux procédés de dépôt de la gaine externe différents. Selon le premier procédé, la préforme primaire est introduite dans un manchon en silice de diamètre légèrement supérieur avant de procéder à un deuxième rétreint. Ce procédé est aussi appelé manchonnage.

La deuxième solution consiste à déposer de la silice sur la préforme primaire de l'extérieur. Ce dépôt externe supplémentaire est aussi appelé recharge. Ce dépôt externe peut être réalisé par différents procédés. Un procédé avantageux est le dépôt assisté au plasma.

Actuellement, une préforme obtenue par MCVD permet d'obtenir environ 250 km de fibre optique par préforme d'un mètre de longueur. Or les préformes obtenues par VAD permettent l'obtention de plus de 400 km de fibre optique par mètre de préforme.

On connaît de EP-A-0 972 752 une préforme de grande taille obtenue par MCVD. Cependant, la partie externe de la gaine optique est obtenue par le procédé de manchonnage. Cette solution présente comme inconvénient un coût très élevé des manchons en silice synthétique.

Il est souhaitable de disposer d'un procédé moins coûteux permettant l'obtention de préformes de grande capacité par le procédé MCVD.

L'objet de l'invention est donc un procédé de fabrication d'une préforme de fibre optique comprenant les étapes de fabrication d'un tube de dépôt en silice dopée au chlore suffisant pour obtenir une concentration en OH inférieure à 100 ppb et dopée au fluor en quantité proportionnelle au dopage au chlore suffisant pour obtenir un indice inférieur à celui d'une silice naturelle, du dépôt d'une gaine interne et d'un coeur optique à l'intérieur du tube de dépôt, du rétreint du tube de dépôt en une préforme primaire, et du dépôt d'une gaine externe en ladite silice naturelle sur la préforme primaire obtenue.

De préférence l'indice du tube de dépôt dopé est inférieur à celui de la silice naturelle d'une valeur comprise entre 0.25 × 10⁻³ et 1.5 × 10⁻³.

De préférence, le tube de dépôt est dopé avec une fraction massique de fluor de 0,25 XCI < XF < 4 XCI.

Avantageusement, la préforme obtenue présente un ratio b : a supérieur à 2. La silice naturelle utilisée est de préférence un quartz alpha.

Selon un mode de réalisation du procédé, le dépôt de la gaine externe est réalisé par dépôt assisté au plasma.

L'invention concerne également un procédé de fabrication d'une fibre optique comprenant l'étape de l'étirage à chaud d'une préforme obtenue selon l'invention.

Ainsi, le problème posé est résolu grâce à l'utilisation d'un tube de dépôt pour la fabrication de préformes de grande capacité qui soit de grande pureté et en même temps compatible avec une gaine externe en silice naturelle.

Un dopage au chlore permet de réduire la présence de groupes OH, responsables d'une atténuation indésirable de la transmission de la fibre optique. Ce dopage modifie cependant l'indice de réfraction à double titre, d'une part du fait d'un « effet chimique » et d'autre part par un « effet physique ». Sous « effet chimique » on entend l'augmentation de l'indice du fait même de la présence du chlore . « L'effet physique est une augmentation de l'indice dû à l'apparition de contraintes locales lors du fibrage. Ces contraintes sont liées à un abaissement de la température de ramollissement du fait de la présence du chlore. La viscosité du tube de dépôt est moins élevée que celle de la silice pure.

L'utilisation de silice naturelle pour la recharge permet d'abaisser considérablement le coût de fabrication des préformes. On entend par le terme « silice naturelle une silice qui ne soit pas obtenue par synthèse, par exemple par décomposition d'halogénures du silicium. La silice naturelle est également désignée comme quartz, par référence au quartz alpha qui est la phase cristalline la plus commune de la silice. Les silices naturelles présentent un faible coût mais aussi une composition légèrement différente de la silice synthétique utilisée pour la fabrication des tubes de dépôt. Il s'en suit que leur indice, leur viscosité et leur coefficient de dilatation sont différents de ceux des tubes de dépôt actuellement disponibles.

Ainsi, une préforme obtenue avec un tube de dépôt classique et rechargée par de la silice naturelle présentera en général un saut de l'indice de réfraction entre le tube de dépôt et la gaine externe. Ce saut d'indice dans la préforme est transmis à la fibre voire amplifié où il conduit à des effets optiques indésirables. Parmi ces effets, on observe par exemple que ces fibres sont plus sensibles aux pertes par microcourbures. La longueur d'onde de coupure peut également être affectée.

Une simple adaptation de l'indice du tube de dépôt à celui de la recharge ne permet pas de résoudre le problème. En effet, il s'avère que le dopage a également pour effet d'abaisser la température de ramollissement. A la température de fibrage, le tube de dépôt présente alors une viscosité plus faible que la silice non dopée, ce qui donne lieu à des contraintes. Ces contraintes entraînent une augmentation de l'indice dans la partie correspondant au tube dans la fibre optique.

Afin de résoudre le problème, le dopage en fluor tient donc compte à la fois de la concentration en chlore et de l'indice de la silice naturelle utilisée pour la recharge.

Les tubes de dépôt utilisés présentent une concentration en groupes OH inférieure à 100 ppb. Ils permettent ainsi la fabrication de préformes ayant un faible ratio b : a. Ce ratio est de préférence inférieur à 2,5.

Afin d'adapter l'indice du tube de dépôt à la silice naturelle, le tube de dépôt est dopé avec une fraction massique XF de fluor proportionnelle à la concentration de chlore présente dans le tube de dépôt. Selon un mode de réalisation, la fraction massique XF de fluor répond à la formule avec 0.25*XCl<XF<4*XCl, où XCI est la fraction massique de chlore. En présence d'autres éléments additifs (Na, Li, Ge, ...) dans le tube la concentration de dopage en F peut être adaptée en conséquence.

L'augmentation de l'indice dû à la présence de chlore est volontairement surcompensée par le dopage en fluor afin de prendre en compte l'augmentation ultérieure de l'indice lors du fibrage.

Les fibres optiques obtenues à partir de préformes fabriquées à partir de tels tubes de dépôt ne présentent ainsi pas de saut d'indice indésirable et ne sont pas sensibles aux pertes de microcourbure. La mesure de la longueur de coupure n'est pas affectée par l'utilisation de silice naturelle pour la gaine externe.

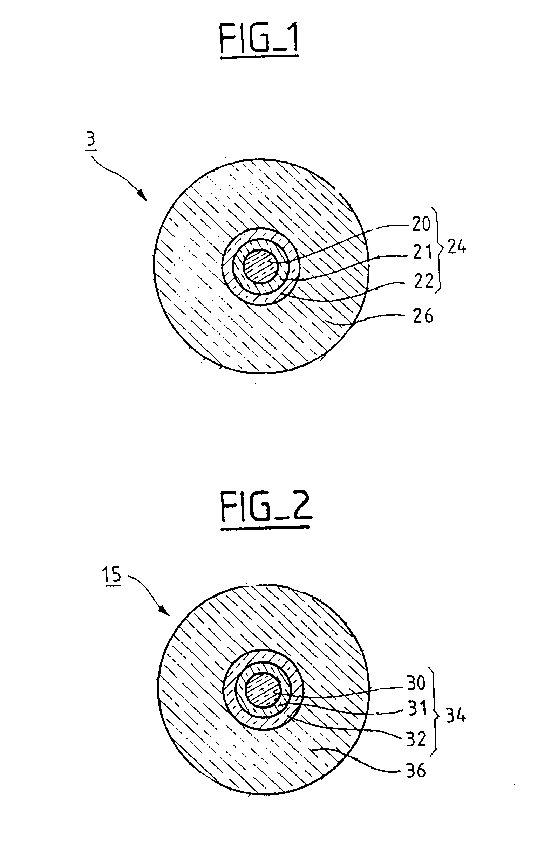

L'invention sera mieux comprise et d'autres caractéristiques et avantages apparaîtront à la lecture de la description qui va suivre, donnée à titre non limitatif, par référence aux figures 1 et 2.

La figure 1 représente une vue en coupe schématique d'une préforme pour fibre optique selon un mode de réalisation de l'invention.

La figure 2 représente une vue en coupe schématique d'une fibre optique obtenue à partir de la préforme selon un mode de réalisation de l'invention.

Une préforme primaire 24, représentée sur la figure 1, est réalisée par exemple selon le procédé MCVD par dépôt interne de couches à base de silice éventuellement dopée formant un coeur optique 20 et une gaine interne 21 dans un tube de dépôt 22. Pour la fabrication de la préforme, on utilise un tube de dépôt 22 en silice dopée au chlore afin de réduire la présence de groupes OH et dopée au fluor dans une proportion équivalente. De préférence, la fraction massique en fluor obéit à la relation suivante :0.25*XCL < XF< 4*XCl.

En effet, il a été constaté que la présence de fluor influence l'indice de réfraction dans la fibre par deux mécanismes distincts. Le premier mécanisme de réduction de l'indice de réfraction par le dopage en fluor est purement physique et est lié à la modification du matériau. L'interaction entre la lumière et le matériau dopé est modifiée. Cette propriété est exploitée lorsque l'on souhaite un bas indice, par exemple pour des fibres à gaine interne déprimée.

L'indice de réfraction est cependant aussi affecté par d'autres mécanismes. En effet, la présence de fluor abaisse la température de transition vitreuse de la silice. Il en résulte une mise en compression du tube de dépôt lors du fibrage, d'autant plus importante que la teneur en fluor est élevée. L'indice de réfraction du tube de dépôt pour une polarisation radiale de la lumière tend alors à remonter. La polarisation radiale est la polarisation normale pour la lumière qui se propage axialement dans une fibre de section circulaire. L'augmentation de cet indice est d'autant plus importante que la concentration en fluor est élevée et que la tension de fibrage est élevée.

Des deux effets cités, pour des tensions de fibrages courantes (inférieures à 250 grammes pour une fibre de verre de diamètre de 125 µm), l'abaissement de l'indice du fait même de la présence du fluor prédomine. Une teneur adéquate en fluor permet d'obtenir un tube de dépôt dont l'indice permet l'utilisation de silice naturelle pour la gaine externe et qui présente une faible concentration en groupes OH.

Le tube de dépôt est composé de silice qui est dopée au fluor selon l'un des procédés connus en soi. Ces tubes de dépôt consistent habituellement en silice très pure, mais peuvent contenir en dehors de la silice et du fluor d'autres composés utiles tels que des oxydes de bore, d'aluminium, d'alcalins ou d'alcalinoterreux.

Le dépôt interne est suivi d'une transformation, par rétreint, du tube ainsi intérieurement revêtu en un barreau qui constitue la préforme primaire 24. Une préforme rechargée 3 est réalisée par dépôt externe à base de silice naturelle formant la gaine externe 26 sur la préforme primaire 24. Un tel dépôt externe peut être réalisé par différents procédés, par exemple par dépôt plasma.

Le procédé par plasma peut être réalisé de manière suivante. Les grains de silice naturelle sont déposés par gravité à partir d'une conduite d'alimentation et qui est déplacée en translation parallèlement à la préforme primaire 24. Les grains de silice sont fusionnés puis vitrifiés sous une température de l'ordre de 2300° C par le plasma. L'opération de recharge s'effectue dans une cabine close pour assurer une protection contre les perturbations électromagnétiques et contre le dégagement d'ozone émis par la torche de plasma.

On aboutit ainsi à une préforme rechargée 3 comprenant une gaine externe 26.

Le fibrage d'une telle préforme permet la fabrication industrielle d'une fibre optique 15 de grande longueur et possédant une bonne résistance aux pertes de microcourbures ainsi qu'une mesure de longueur de coupure non affectée.

La fibre optique 15 est fabriquée par étirage à chaud à partir de la préforme primaire rechargée 3. La tension de fibrage est réglée de préférence à une valeur comprise entre 10 et 250g, de préférence entre 30 et 150g. La figure 2 représente une vue en coupe schématique d'une fibre optique 15 obtenue à partir de la préforme 3.

On y distingue un coeur optique 30 et une gaine interne 31, formant la partie transmettant la majeure partie de la lumière. Par rapport à la préforme 3, la zone 32 correspond au tube de dépôt 22 et la zone 36 correspond à la gaine externe 26 et la zone 34 correspond à la préforme primaire 24.

Bien entendu, l'objet de l'invention ne se limite pas aux représentations décrites ci-dessus. Ainsi, les préformes peuvent comporter d'autres couches supplémentaires. Il est aussi possible d'utiliser pour le dépôt de la gaine externe d'autres procédés tels que les procédés sol-gel, les imprégnations, les dépôts en phase gazeuse.

## Revendications

1. Procédé de fabrication d'une préforme (3) de fibre optique comprenant les étapes de :
- fabrication d'un tube de dépôt (22) en silice dopée au chlore de manière suffisante pour obtenir une concentration en OH inférieure à 100 ppb et dopée au fluor en quantité proportionnelle au dopage au chlore de manière suffisante pour obtenir un indice inférieur à celui d'une silice naturelle ;
- dépôt d'une gaine interne (21 ) et d'un coeur optique (20) à l'intérieur du tube de dépôt ;
- rétreint du tube de dépôt en une préforme primaire (24) ; et
- dépôt d'une gaine externe (26) en ladite silice naturelle sur la préforme primaire obtenue.

2. Procédé selon la revendication 1, dans lequel le tube de dépôt est dopé avec une fraction massique de fluor de 0,25 XCI < XF < 4 XCI.

3. Procédé selon la revendication 1 ou 2, dans lequel la préforme obtenue présente un ratio b : a supérieur à 2.

4. Procédé selon l'une des revendications précédentes, dans lequel la silice naturelle est un quartz alpha.

5. Procédé selon l'une des revendications précédentes, dans lequel l'indice dudit tube de dépôt dopé est inférieur à celui de la silice naturelle d'une valeur comprise entre 0.25 × 10⁻³ et 1.5 × 10⁻³.

6. Procédé selon l'une des revendications précédentes, dans lequel le dépôt de la gaine externe est réalisé par dépôt assisté au plasma.

7. Procédé de fabrication d'une fibre optique (15) comprenant l'étape de l'étirage à chaud d'une préforme (3) obtenue selon l'une des revendications précédentes.

## Claims

1. A method of manufacturing an optical fiber preform (3), the method comprising the following steps:
providing a substrate tube (22) of silica doped with sufficient chlorine to obtain an OH concentration of less than 100 ppb and doped with sufficient fluorine relative to the chlorine doping to obtain a refractive index that is lower than that of a natural silica;
· depositing inner cladding (21) and an optical core (20) inside the substrate tube;
· collapsing the substrate tube to form a primary preform (24); and
· depositing outer cladding (26) of said natural silica on the resulting primary preform.

2. A method according to claim 1, in which the substrate tube is doped to have a mass concentration of fluorine lying in the range 0.25 XCI < XF < 4 XCI.

3. A method according to claim 1 or claim 2, in which the resulting preform presents a b:a ratio greater than 2.

4. A method according to any preceding claim, in which the natural silica is an alpha quartz.

5. A method according to any preceding claim, in which the refractive index of said doped substrate tube is less than that of the natural silica by an amount lying in the range 0.25 × 10⁻³ to 1.5 × 10⁻³.

6. A method according to any preceding claim, in which the outer cladding is deposited by plasma-assisted deposition.

7. A method of manufacturing an optical fiber (15), said method including the step of hot fiber drawing a preform (3) obtained using the method of any preceding claim.

## Patentansprüche

1. Verfahren zum Herstellen einer Vorform (3) für optische Fasern, beinhaltend die Schritte:
- der Herstellung eines Abscheiderohres (22) aus Quarzglas, das so mit Chlor dotiert ist, daß sich eine OH-Konzentration von weniger als 100 ppb einstellt, und das mit Fluor in einer zum Chlor ausreichend großen proportionalen Menge dotiert ist, so daß sich ein Brechungsindex ergibt, der geringer als der von natürlichem Quarzglas ist;
- des Aufbringens eines inneren Fasermantels (21) und eines optischen Kerns (20) im Inneren des Abscheiderohres;
- des Reduzierens des Abscheiderohres auf eine primäre Vorform (24) und
- des Aufbringens eines äußeren Fasermantels (26) aus besagtem natürlichen Quarzglas auf die hergestellte primäre Vorform.

2. Verfahren gemäß Anspruch 1, bei welchem das Abscheiderohr mit einem Fluor-Massenanteil von 0,25 XCI < XF < 4 XCI dotiert ist.

3. Verfahren gemäß Anspruch 1 oder 2, bei welchem die hergestellte Vorform ein b:a-Verhältnis von mehr als 2 aufweist.

4. Verfahren gemäß einem oder mehreren der vorgenannten Ansprüche, bei welchem das natürliche Quarzglas ein Alpha-Quarz ist.

5. Verfahren gemäß einem oder mehreren der vorgenannten Ansprüche, bei welchem der Brechungsindex des besagten dotierten Abscheiderohres geringer ist als derjenige von natürlichem Quarzglas und einen Wert zwischen 0,25 × 10⁻³ und 1,5 × 10⁻³ aufweist.

6. Verfahren gemäß einem oder mehreren der vorgenannten Ansprüche, bei dem die Beschichtung des äußeren Fasermantels durch Plasmaspritzen bewerkstelligt wird.

7. Verfahren zur Herstellung einer optischen Faser (15), beinhaltend den Schritt des Warmziehens einer gemäß einem oder mehreren der vorgenannten Ansprüche hergestellten Vorform.
